Europäisches Patentamt

European Patent Office

Office européen des brevets

(19)

(11) Publication number: **0 032 317**
**A2**

# (12) EUROPEAN PATENT APPLICATION

(21) Application number: **80304750.5**

(22) Date of filing: **30.12.80**

(51) Int. Cl.³: **B 01 D 35/06**

(30) Priority: **15.01.80 GB 8001307**

(43) Date of publication of application:
**22.07.81 Bulletin 81/29**

(84) Designated Contracting States:
**AT BE CH DE FR GB IT LI LU NL SE**

(71) Applicant: **A.P.V.-Carlson Limited**
**Cavendish Street**
**Ashton-under-Lyne Lancashire, OL6 7DN(GB)**

(72) Inventor: **Shackleton, Ronald**
**Broad Oak Park Road**
**Disley Stockport SK12 2NA(GB)**

(74) Representative: **Bray, Lilian Janet et al,**
**MARKS & CLERK Scottish Life House Bridge Street**
**Manchester M3 3DP(GB)**

(54) A method of liquid filtration.

(57) A method of liquid filtration comprises providing an electrically conducting high surface area bed which has been electrically charged and passing the liquid to be filtered therethrough to cause electrosorption or adsorption of contaminants therein by the bed. The bed can be charged by application of a potential thereto or passage of a current therethrough. Regeneration of the bed can be achieved by changing the electrical potential of the bed and passing a cleansing liquid therethrough. This causes the contaminants retained within the bed to be desorbed, discharged into the cleansing liquid and thereby removed from the bed.

./...

EP 0 032 317 A2

Croydon Printing Company Ltd.

FIG. 2

1.

A METHOD OF LIQUID FILTRATION

The present invention relates to a method of
electrochemical liquid filtration.

Present methods of filtration as used especially
in the beverage pharmaceutical, and cosmetic industries
rely on sheet filtration, kieselguhr or pearlite
filter aids used with a plate and frame press or
cartridge filters using pleated membrane media.
Although sheets and membranes can be backwashed, they
must eventually be discarded. There is increasing
difficulty in disposing of used sheets for safety
reasons and because of stringent legislation recently
introduced. Sheets containing asbestos should only
be dumped at specially licensed sites, sometimes
involving a considerable haulage distance and, in
consequence, high costs. Filter aids, even if
discharged as a dry cake, should no longer be
discharged directly into drains. For both these
reasons therefore a method of filtration which would
eliminate these disposal problems is desirable.

2.

Such a method would also eliminate the costs of filter dressing.

The matter that must be removed, for example, from beverages comprises a wide range of contaminants from coarse organic material to extremely fine haze material. Yeast, spoilage organisms and fine non-viable colloidal materials usually carry an electrical charge the magnitude and polarity of which depends, inter alia, on the pH of the electrolyte system. Hence, it is possible to use the phenomena of electrosorption and adsorption for the removal of such material by retention of the material by a charged medium.

With regard to the filtration of products for human and animal consumption and pharmaceutical products, it may not be necessary to remove all such material from the liquid provided that all possible harmful contaminants are either removed or reduced to a safe level of concentration. The term filtration as used hereinafter and in the claims is intended to be understood in this sense and not in an absolute sense, that is with regard to the removal or reduction of concentration of various known contaminants from liquids. As such, the term filtration also covers in some applications sterilization, as yeast or harmful bacteria, for example, may be removed from a liquid being filtered.

According to the present invention there is provided a method of liquid filtration comprising

3.

the steps of providing an electrically conducting high surface area bed, which has been electrically charged, passing the liquid to be filtered through the bed, and collecting the filtrate as it egresses from the bed, characterised in that the bed can be regenerated by changing the electrical potential of the bed and passing a cleansing liquid through the bed whereby the filtered-out residue is discharged into the cleansing liquid and thereby removed from the bed.

Preferably, an electrical potential is applied to the bed to charge same, the magnitude of which potential is altered when it is desired to regenerate the bed. Alternatively, the polarity of the potential is reversed when it is desired to regenerate the bed.

Preferably also, the cleansing liquid has a different composition, ionic strength or pH value, from the liquid being filtered whereby on passage of the cleansing liquid through the bed the electrical potential of the bed is changed to assist in regeneration of the bed.

The present invention makes use of the phenomena of adsorption and desorption occurring within the bed to collect contaminants from the liquid and to regenerate the bed respectively. The application of an electrical

4.

potential to or passage of a current through the bed assists in adsorption and desorption. It is not, however, a necessary condition of the invention that the contaminant material should possess an electrical charge for successful filtration but it must be capable of adsorption or electrosorption.

It has been found that yeast and bacteria as well as proteins and oils can be successfully filtered out from liquids such as beer, whisky or pharmaceutical products by the method according to the present invention. In addition, the degree of filtration can also be controlled by varying the potential of the bed and the rate of flow of liquid to be filtered therethrough.

The present invention will now be described by way of example with reference to the accompanying drawings, in which:-

Figs. 1A and 1B are diagrams showing the basic construction of two different types of packed bed cell respectively for use in the method according to the present invention;

Fig. 2 is a longitudinal cross sectional view of a vertical cylindrical packed bed for use in the method of the present invention;

Fig. 3 is a cross sectional view of a horizontal flat packed bed cell for use in the method of the present invention;

5.

Fig. 4 is a cross sectional view of a vertical plane packed bed cell of use in the method of the present invention; and

Figs. 5, 6, and 7 are graphs showing the regeneration of a bed cell as shown in Fig. 4 under various electrical potential conditions by indicating the turbidity of a cleansing liquid egressing from the bed cell against the total quantity of the cleansing liquid which has so egressed.

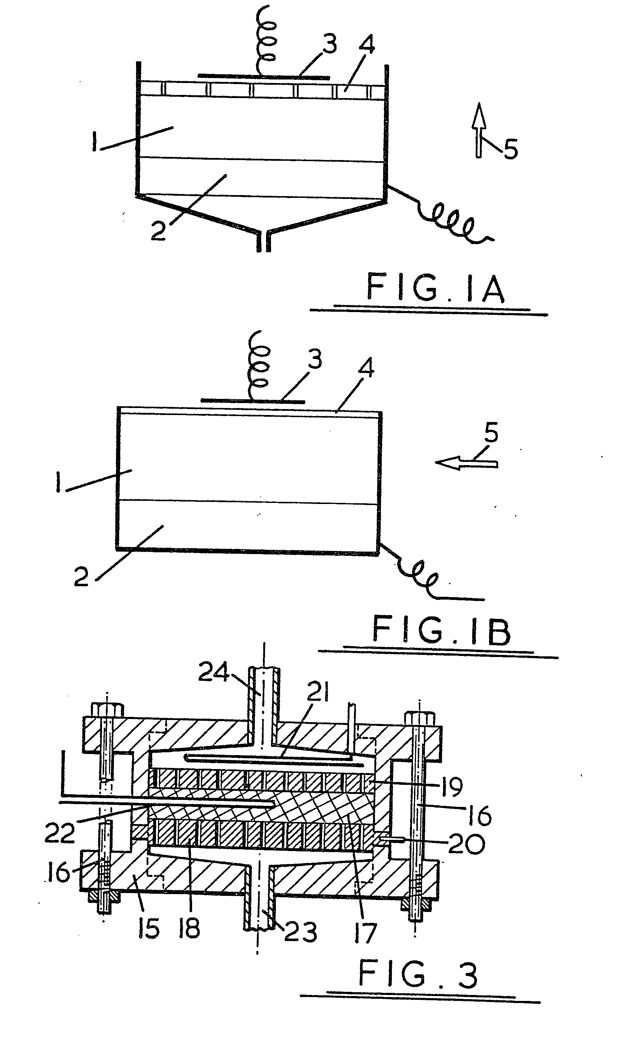

Referring firstly to Figs. 1A and 1B, the basic components of a packed bed cell for use in the method according to the invention comprise a bed 1 of an electrically conducting particulate or fibrous material, a current distributor 2 which is located adjacent the bed 1 and in electrical contact with it, a counter electrode 3 located exteriorly of the bed 1 and in opposition to the current distributor 2, and an electrically insulating and porous membrane or other suitable separator 4 located between the bed 1 and the counter electrode 3. The direction of liquid flow through the bed 1 is indicated by the arrow 5 in both Figs. 1A and 1B.

Figs. 1A and 1B show two significantly different cell configurations; a horizontal flat bed cell and a vertical plane bed cell respectively.

In Fig. 1A showing the horizontal flat bed cell, the liquid flow and electrical potential gradient are parallel to each other and to the smallest dimension of the bed 1. All liquid flow

6.

through the cell flows over both the bed 1 and the counter-electrode 3.

In Fig. 1B showing the vertical plane bed cell the direction of liquid flow is parallel to the largest dimension of the bed 1 and at right angles to the potential gradient which again is directed along the shortest dimension of the cell. This permits the use of a very much deeper bed than a horizontal flat bed cell enabling a longer flow path for the liquid to be provided and also permits the separation of anolyte and catholyte by means of a semi-permeable membrane. This latter could be an advantage if undesirable byproducts which require isolation are produced at the counter-electrode 3.

It is usual to insert a probe electrode into the bed 1 so that an indication of the potential drop across the bed 1 can be given. This enables the potential between the current distributor 2 and the probe tip to be controlled and adjusted, usually via a standard calomel electrode (S.C.E.). Additionally, the inclusion of a potentiostat in the electrical circuitry of the bed enables automatic and rapid control of the potential drop across the bed 1 between the current distributor 2 and the probe tip.

Fig. 2 shows in more detail a vertical bed cell, which is of the same basic configuration as the bed cell shown in Fig. 1B above. The cell comprises a central graphite rod 6 which forms the

7.

counter electrode and which is encased in a cylinder 7 of graphite particles comprising the bed. The bed 7 is separated from contact with the counter electrode 6 by a semi-permeable insulating membrane or diaphragm (not shown). Surrounding the bed 7 is a cylindrical feeder electrode 8 and the whole is encased in a casing (not shown) which is made of a non-electrochemically active material. The inlet 9 for the liquid to be filtered is at the base of the casing so that the liquid has to rise up through the bed 1 before egressing from the outlet 10 at the top thereof. Sintered glass discs 11 are provided at the inlet 9 and the outlet/to contain the bed material. Located in the bed 7 is a salt bridge probe 12, the tip 13 of which is positioned at approximately the mid-point of the vertical height of the bed 7 to enable the potential drop within the bed to be controlled. The ends of the feeder electrode 8 are closed by bungs 14 of an electrically insulating and electrochemically inert material which seal the cell and also contain the bed material therein.

In the above description, the bed material has been described as comprising graphite particles. However, various other forms of bed material can be used. All graphites and carbons, even if not specially activated, have a significant degree of natural adsorption of organic material such as would be present when filtering beverages such as beer or whisky and certain pharmaceutical liquids.

8.

The adsorptive capacity of graphite and carbon may be increased by application of an appropriate electric potential thereto and it is known that the treatment of graphite or carbon with sulphuric acid increases the effectiveness of adsorption and the capacity of the bed to adsorb contaminants.

A suitable treatment for carbon or graphite comprises the steps of heating the carbon or graphite in concentrated sulphuric acid up to about $150^{o}C$, allowing to cool and then rinsing with copious quantities of water. It has been demonstrated that the adsorptive loading is then inversely proportional to the mean particle diameter of the carbon or graphite. This implies that the loading increases as the surface area increases.

Suitable forms of carbon or graphite include these materials in particulate, powdered, flaked or fibre forms. Additionally, carbon can be used in felt, cloth, fibre, or wool form, and fibres of other materials coated in carbon can be used. Alternatively, certain types of metal particles can be used.

These bed materials are all suitable for use in the vertical bed cell as described above and in the cells as described hereinafter.

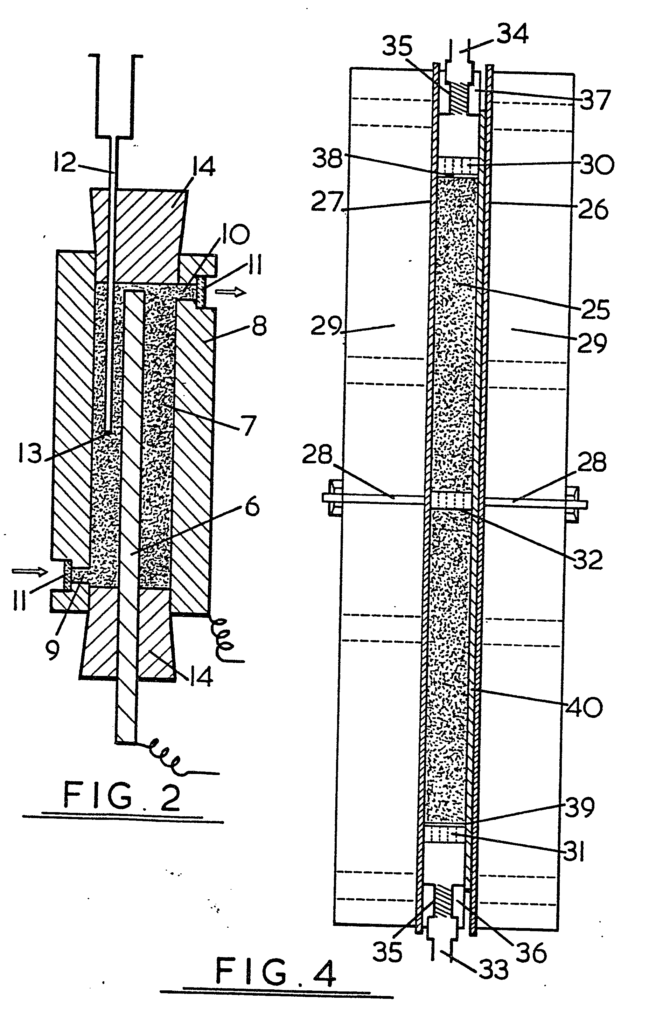

Fig. 3 shows in more detail a horizontal flat bed cell of the configuration shown in Fig. 1A. This bed cell is contained in a casing 15 of plastics material, which casing 15 is in two parts

9.

and clamped together by tie bolts 16. All mating surfaces of the two parts are coated with an inert sealant before assembly. The cell comprises a packed bed 17 of carbonaceous material comprising graphite granules of the types described above. The bed material is retained between a graphite current distributor 18 and disc 19 made of a plastics material. To permit passage of the liquid to be filtered through the cell, the distributor 18 and the disc 19 are provided with a plurality of holes but to prevent escape of the bed particles, a very fine permeable screen (not shown) of an electrically insulating fibre is located between the bed 17 and the disc 19.

The current distributor 18 comprises a disc made from a good quality dense graphite and is rebated at its edges for location in the casing 15. The disc is attached to a metallic electrical connector 20 such as a brass or copper rod. It is important to ensure that there is a good electrical connection between the disc 18 and the connector 20 so that the potential drop between these components is minimised and the potential drop across the bed 17 is maximised.

A counter electrode 21 is provided above the distributor 18 and may be fixed to the internal surface of the casing 15.

A probe electrode 22 is provided embedded in the bed 17 so that the potential of the bed 22 can be controlled.

Flow of liquid across the bed, via an inlet
23 and an outlet 24 formed in the casing 15, occurs
upwardly. It is necessary to ensure that the pressure drop across the distributor 18 is sufficient
to prevent channelling of the liquid through the
bed 22.

The bed potential can be measured, in use, by
means of the salt bridge probe 22 and, for example,
a standard calomel electrode. The potential
difference can then be measured (allowing for the
e.m.f. of the standard calomel electrode) between
the liquid solution in the immediate vicinity of the
probe tip and the graphite distributor 18. It should
be noted that this measurement is not the over-
voltage between the bed 17 and the liquid although
this over-voltage is the driving force for
electrosorption.

Fig. 4 shows a further cell construction, namely
a vertical planar bed cell, which is constructed in
a basically similar way to Fig. 1B. The cell is
substantially symmetrical about a central vertical
plane unlike the bed cell described above with
reference to Fig. 2, which is cylindrical. At the
centre of the bed cell is a bed 25, which comprises
a packed bed of carbonaceous material such as
graphite particles or similar as described above
for the horizontal bed cell with reference to Fig.
2. The bed 25 is retained between two graphite
plates 26 and 27 which form respectively a counter
electrode and a feeder electrode. The feeder electrode 27 also acts as a current distributor. To
this end, each plate 26, 27 is electrically connected to a metal rod 28 such as a brass or
copper rod that projects out of the cell to be
connected into an electrical circuit for the cell.

The plates 26, 27 are retained in position
between clamping frames 29 which should be made of
an insulating and electrochemically inert material,
such as P.T.F.E. or which can be made of metal
provided the plates 26, 27 are insulated from the
frames 29.

The bed 25 is restrained vertically between
perforated top and bottom members 30 and 31
respectively. A similar member 32 is also provided
centrally of the bed 25 adjacent the metal rods 28.
Access is provided to the bed 25 through the members
30 and 31 by means of an inlet and an outlet duct
33, 34 respectively which are located adjacent the
members 30 and 31. The ducts 33, 34 are waisted
as at 35 to accommodate inner frame members 36, 37
which enable the ducts 33, 34 to be respectively
retained in position.

In order to electrically insulate the bed
cell, two insulating permeable membranes or
diaphragms 38, 39 are provided adjacent the top
and bottom members 30, 31 respectively between
the latter and the bed 25. Additionally, the feeder
counter electrode 26 is insulated from the bed 25
by means of an insulating membrane or diaphragm
40.

12.

In use, liquid to be filtered is passed into the cell via the inlet duct 33 at the bottom of the cell and the filtered liquid egresses from the top of the cell via the outlet duct 34. The top, bottom and central members 30, 31 and 32 assist in evening out the flow of liquid through the bed 25. In order to control the potential drop within the bed 25, a probe electrode (not shown) can be used projecting into the centre of the bed 25 in conjunction with a standard calomel electrode (S.C.E.).

In the method according to the present invention, the bed cell is electrically charged. Preferably an electrical potential is applied to the electrically conducting bed of any of the bed cells as described above. This potential is conveniently applied by passing a current through the bed via the counter and feeder electrodes. The probe inserted into the bed in the cell configurations described above can then be used to monitor the potential and enable it to be appropriately controlled. Once the potential has been applied to the bed the liquid to be filtered is then passed through the bed so that contaminants therein are adsorbed by and retained in the bed, the filtrate passing out of the bed being collected for use. The electrosorption and adsorption of contaminants is aided by the potential drop within the bed. Continuous use of the bed eventually causes the bed to lose its effectiveness as it becomes filled with adsorbed contaminants. The invention, therefore, provides for regeneration of the bed by removal of the contaminants therefrom

13.

Regeneration is accomplished by causing the
adsorbed contaminants to be desorbed from the bed
so that they can be flushed out of the bed by a
cleansing liquid. Desorption of the contaminants
is achieved by varying the potential of the bed
sufficiently and this can be accomplished in
several ways. Firstly, the magnitude of the potential
applied to the bed can be altered or the polarity
of the potential can be reversed. In this case,
further passage of liquid through the bed will
flush out the desorbed contaminants, the liquid
comprising a different cleansing liquid or even
further liquid of the type to be filtered.
Alternatively, the potential of the bed can be
varied by passing a cleansing liquid through the
bed which differs from the liquid previously being
filtered in that its composition, ionic strength or
pH value is different. Alteration of any or all of
these factors alters the equilibrium within the bed
from its previous equilibrium during filtration and
brings about consequential alteration in the potential
of the bed sufficient to cause desorption to occur.
As an example, when beverages such as beer or
whisky have been filtered by a carbonaceous bed
a suitable cleansing liquid for causing regeneration
of the bed is a sodium sulphate solution.

In addition to the foregoing, it should also
be appreciated that the electrical potential drop
across the bed or the current flowing through the
bed need not remain stable during adsorption
provided that the polarity of the potential is not
reversed for adsorption of contaminant to occur.
Hence, oscillating potentials can be applied to

14.

the bed and may take various forms such as for example sinusoidal, ramp or triangular waveforms. Additionally, a constant current as opposed to a constant potential drop can be applied to the bed.

Examples of the method of filtration according to the present invention now follow to illustrate use of the bed cells described above with reference to Figs. 2, 3 and 4 and to show the use of various potential conditions within the bed cell concerned. The tests used to example the success of the filtration and regeneration include tests to examine the turbidity of the liquid both before and after filtration or regeneration based on the standard tests either of parts per million of silica (ppm $SiO_2$) or of turbidity measured in the standard European Brewing Confederation (E.B.C.) units, and colony count tests again using standard techniques. All the following tests were conducted at room temperature.

## Example 1

In this example a bed cell of the vertical cylindrical type was used as described with reference to Fig. 2 above to filter beer. The bed was 10 centimetres deep and approximately 1 centimetre thick between electrodes. The bed material itself comprised 90 - 150 $\mu$m Morganite EY110 graphite powder and the insulating membrane comprised a collodion membrane.

15.

During filtration, the potential of the bed as measured by a saturated calomel electrode via the probe was +0.40 volts.

| Beer Flow Rate Through Bed ml per minute | Beer Input Turbidity E.B.C. Units | Beer Output Turbidity E.B.C. Units |
|---|---|---|
| 5 | 6.1 | 0.75 |
| 10 | 8.15 | 1.85 |
| 10 | 1.85 | 0.25 |

## Example 2

In this example a bed cell of the flat horizontal type was used as described above with reference to Fig. 3 to filter beer. The bed material comprised powdered Morganite EY110 graphite and was of 1 centimetre thickness within the cell. The fine permeable screen was made of paper.

During filtration, the potential of the bed with respect to a saturated calomel reference electrode was +0.20 volts and the flow rate of the beer in both examples was 0.6 litres per hour.

| Beer Input Turbitity E.B.C. units | Beer Output Turbidity E.B.C. units |
|---|---|
| 5.0 | 0.70 |
| 1.8 | 0.40 |

16.

Regeneration of the bed was also carried out and to accomplish this the potential and polarity of the bed was altered to -0.70 volts. The cleansing liquid used was 0.01M sodium sulphate solution, which was passed through the bed at a flow rate of 0.6 litres per hour. The input turbidity of the cleansing liquid was less than 0.1 E.B.C. units and the output turbidity was 1.5 E.B.C. units, which compares favourably the filtration results indicating a good level of regeneration of the bed.

## Example 3

In this example a vertical planar type bed cell was used as described above with reference to Fig. 4. The bed was 1 centimetre thick and 10 centimetres deep and the bed material used was powdered Morganite EY100 graphite. The insulating diaphragm or membrane comprised a paper diaphragm.

Firstly, beer was filtered with different turbidities. The flow rate was kept constant at 0.60 litres per hour and the potential of the bed was held constant at +0.30 volts as measured by a saturated calomel electrode.

| Beer Input Turbidity E.B.C. units | Beer Output Turbidity E.B.C. units |
|---|---|
| 7.0 | 1.6 |
| 14.0 | 0.8 |
| 22.0 | 4.0 |

17.

Secondly, whisky was filtered with varying turbidity. In this case the flow rate was kept constant at 0.30 litres per hour and the potential of the bed was held constant at +0.50 volts as measured by a saturated calomel electrode. In this case the turbidity of the whisky was measured by parts per million of silica )ppm $SiO_2$).

| Whisky Input Turbidity ppm $SiO_2$ | Whisky Output Turbidity ppm $SiO_2$ |
| --- | --- |
| 13 | 4.4 |
| 23.5 | 3.5 |

The following examples all relate to showing the effect of different bed potentials on the filtration taking place within the bed cell. The bed cell used in all the following examples was a vertical planar bed cell as described above with reference to Fig. 4 and as used in Example 3 above.

Example 4

This example concerns the application of a stable potential to the bed cell as measured by a saturated calomel electrode. In all cases during filtration the flow rate of liquid through the bed was 0.60 litres per hour.

Example 4

| Liquid | Bed Potential (V) | Input Liquid | | Output Liquid | |
|---|---|---|---|---|---|
| | | Turbidity (ppm $SiO_2$) | Colony Count (colonies $ml^{-1}$) | Turbidity (ppm $SiO_2$) | Colony Count (colonies $ml^{-1}$) |
| Lager | +0.7 | 24 | 500 | 7 | $< 1$ |
| Lager | +0.3 | 6.3 | 808 | 5.7 | $< 1$ |
| Lager | +0.3 | 12.2 | Circa 16,000 | 6.0 | Circa 8,000 |
| Serratia Marcescans culture diluted in 0.01M sodium sulphate solution | None applied | 1.6 | 2,200 | 0.4 | 600 |

18.

19.

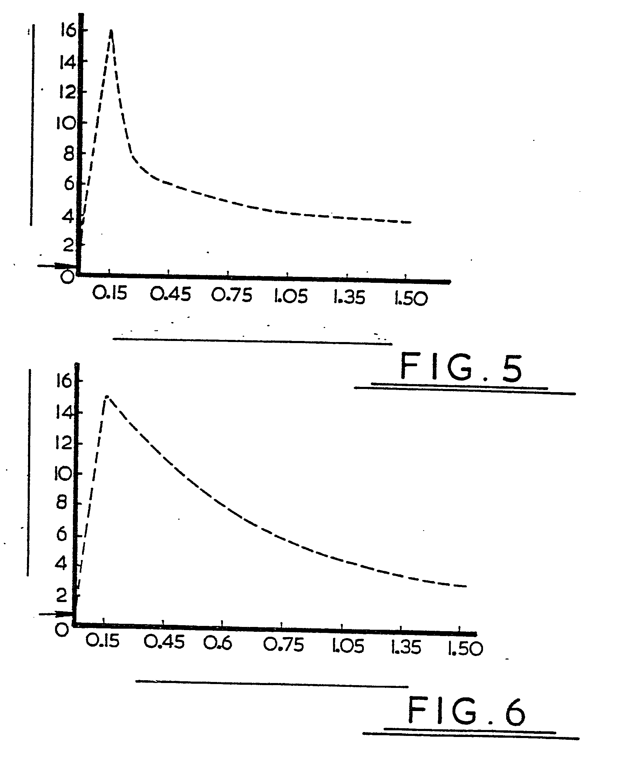

To regenerate the bed, the polarity of the potential was reversed and a cleansing liquid was passed through the bed as indicated in the following table. The variation of the turbidity of the egressing liquid from the bed compared at intervals with the quantity of the liquid which has passed out of the bed is shown in the graph forming Fig. 5 of the accompanying drawings.

Example 4

| Liquid | Bed Potential (V) | Input Liquid | | Output Liquid | |
|---|---|---|---|---|---|
| | | Turbidity (ppm $SiO_2$) | Colony Count (colonies $ml^{-1}$) | Turbidity (ppm $SiO_2$) | Colony Count (colonies $ml^{-1}$) |
| 0.01M Sodium Sulphate Solution | -0.30 | 0.6 | <0.1 | 1.2 | Circa 5,000 |

21.

## Example 5

In this example a triangular oscillating potential was applied to the bed cell. During filtration, the potential was oscillated from 0.00 volts to +0.60 volts at various frequencies as indicated below. In all cases the flow rate of liquid through the bed was 0.6 litres per hour.

## Example 5

| Liquid | Bed Potential (V) | Input Liquid | | Output Liquid | |
|---|---|---|---|---|---|
| | | Turbidity (ppm $SiO_2$) | Colony Count (colonies $ml^{-1}$) | Turbidity (ppm $SiO_2$) | Colony Count (colonies $ml^{-1}$) |
| Lager | 3.8 | 5.2 | 77 | 4.4 | <0.1 |
| Lager | 0.02 | 9.5 | 44 | 4.2 | <0.1 |
| Pale Ale | 4.0 | 63 | 1,200 | 39 | <1.0 |
| 0.01M Sodium Sulphate Solution | 0.02 | 4 | Circa 2,000 | 0.6 | <10 |

22.

23.

After each of the above examples, regeneration of the bed was performed. Regeneration was accomplished by passing 0.01M sodium sulphate solution through the bed after the range of oscillation of the bed had been changed to -0.30 volts to +0.30 volts at a frequency of 0.02 Hz. The results of this regeneration are shown in the graph forming Fig. 6 of the accompanying drawings and which shows the variation of turbidity with the total output volume of the cleansing liquid which has passed through the bed.

## Example 6

In this example a constant current was applied to the bed during filtration. Again a constant rate of liquid flow through the bed was maintained at 0.6 litres per hour.

Example 6

| Liquid | Applied Current (mA) | Steady State Potential (v) | Input Liquid | | Output Liquid | |
|---|---|---|---|---|---|---|
| | | | Turbidity (ppm $SiO_2$) | Colony Count (colonies $ml^{-1}$) | Turbidity (ppm $SiO_2$) | Colony Count (colonies $ml^{-1}$) |
| Lager | 3 | 0.30 | 11 | 950 | Between 4 and 5 | 160 |
| Lager | 5 | 0.55 | 5.4 | 340 | Between 4 and 4.5 | $< 1$ |

25.

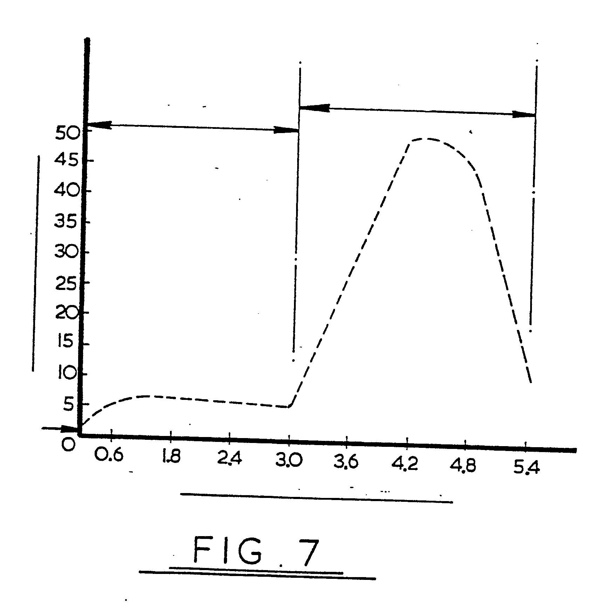

Regeneration of the bed was also performed under two different constant current conditions using 0.01M sodium sulphate solution as the cleansing liquid. The results of the regeneration as shown in the graph forming Fig. 7 of the accompanying drawings and which shows the variation of turbidity with the total quantity of cleansing liquid which has passed out of the bed. It will be seen from the graph that a constant current of 1mA was applied until 3.0 litres of the cleansing liquid had passed through the bed whereafter the current was increased to 5mA.

26.

CLAIMS

1.   A method of liquid filtration comprising the steps of providing an electrically conducting high surface area bed, which is electrically charged, passing the liquid to be filtered through the bed, and collecting the filtrate as it egresses from the bed, characterised in that the bed can be regenerated by changing the electrical potential of the bed and passing a cleansing liquid through the bed whereby the filtered out residue is discharged into the cleansing liquid and thereby removed from the bed.

2.   A method as claimed in claim 1, characterised in that the bed is electrically charged by the imposition of an electrical potential thereto or by the passage of a current therethrough.

3.   A method as claimed in claim 2, in which a constant electrical potential is applied to the bed during filtration, and characterised in that the magnitude of the potential is changed when it is desired to regenerate the bed.

4.   A method as claimed in claim 2, in which an electrical potential is applied to the bed during filtration and characterised in that the polarity of the potential is reversed when it is desired to regenerate the bed.

27.

5.   A method as claimed in claim 2, in which an oscillating potential is applied to the bed over a predetermined range and characterised in that the magnitude of the range of oscillation of the potential is altered when it is desired to regenerate the bed.

6.   A method as claimed in claim 5, in which during filtration the predetermined range of oscillation is limited to a single polarity of potential and characterised in that during regeneration the range of oscillation is altered to include the reverse polarity.

7.   A method as claimed in any one of claims 2 to 6, characterised in that the cleansing liquid is the same as the liquid to be filtered.

8.   A method as claimed in any one of claims 1 to 6, characterised in that the cleansing liquid has a different composition, ionic strength, or pH value from the liquid being filtered whereby on passage of the cleansing liquid through the bed the electrical potential of the bed changes to cause or assist regeneration of the bed.

9.   A method as claimed in claim 8, characterised in that the cleansing liquid comprises a solution of sodium sulphate.

10.  A method as claimed in any one of claims 1 to 9, characterised in that the high surface area bed comprises packed carbon or graphite.

28.

11.  A method as claimed in claim 10, characterised
in that the carbon or graphite has been pretreated by
having been heated in sulphuric acid.

FIG. IA

FIG. IB

FIG. 3

FIG.2

FIG.4

FIG.5

FIG.6

FIG . 7